(19) Europäisches Patentamt
European Patent Office
Office européen des brevets

(11) EP 1 292 067 A1

(12) **EUROPEAN PATENT APPLICATION**

(43) Date of publication:
**12.03.2003 Bulletin 2003/11**

(51) Int Cl.[7]: **H04L 9/06**

(21) Application number: **02019967.5**

(22) Date of filing: **05.09.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **08.09.2001 GB 0121747**

(71) Applicant: **Amphion Semiconductor Limited**
**Belfast BT9 5BS (GB)**

(72) Inventors:
- **Hu, Yi**
  **Belfast, Northern Ireland (GB)**
- **McLoone, Maire Patricia**
  **Glenties, County Donegal (IE)**

(74) Representative: **Wallace, Alan et al**
**F. R. Kelly & Co.**
**9 University Street**
**Belfast BT7 1FY (GB)**

(54) **Block encryption/decryption apparatus for Rijndael/AES**

(57) The present invention concerns in particular the efficient implementation of encryption or decryption rounds of data encryption algorithms, particularly the Rijndael Block Cipher. The invention provides an apparatus for encrypting or decrypting a data block, the apparatus comprising a transformation module and a plurality of shift registers each comprising a sequence of data registers through which data components are shifted in successive operational cycles. At least some of the data registers are associated with a respective selector switch, the setting of which determines whether the associated data register is loaded with a data component from a data register in its respective shift register or with a transformed data component corresponding to its respective shift register. The provision of shift registers and switches affords a significant saving in circuit area. Further, the invention requires a relatively low number of switches (e.g. multiplexers) in the computational data paths and this allows a relatively high throughput to be achieved.

40
Plaintext
Key
Data/Key Addition
48
Key Scheduler
50
128
32
44
8
Data Scheduling
100
¼ Round Transform
156
Final Round
46
Ciphertext

Fig. 4

EP 1 292 067 A1

## Description

FIELD OF THE INVENTION

The present invention relates to the field of data encryption. The invention relates particularly to improvements in the scheduling of data in a data encryption or decryption apparatus.

BACKGROUND TO THE INVENTION

Secure or private communication, particularly over a telephone network or a computer network, is dependent on the encryption, or enciphering, of the data to be transmitted. One type of data encryption, commonly known as private key encryption or symmetric key encryption, involves the use of a key, normally in the form of a pseudo-random number, or code, to encrypt data in accordance with a selected data encryption algorithm (DEA). To decipher the encrypted data, a receiver must know and use the same key in conjunction with the inverse of the selected encryption algorithm. Thus, anyone who receives or intercepts an encrypted message cannot decipher it without knowing the key.

Data encryption is used in a wide range of applications including IPSec Protocols, ATM Cell Encryption, Secure Socket Layer (SSL) protocol and Access Systems for Terrestrial Broadcast.

In September 1997 the National Institute of Standards and Technology (NIST) issued a request for candidates for a new Advanced Encryption Standard (AES) to replace the existing Data Encryption Standard (DES). A data encryption algorithm commonly known as the Rijndael Block Cipher was selected for the new AES.

The present invention concerns in particular the efficient implementation of encryption or decryption rounds of data encryption algorithms, particularly the Rijndael Block Cipher.

Summary of the Invention

A first aspect of the invention provides an apparatus for encrypting or decrypting a data block comprising a plurality of data components over a plurality of operational cycles, the apparatus comprising a transformation module arranged to perform one or more encryption or decryption operations in each operational cycle; and a plurality of shift registers each comprising a sequence of data registers through which data components are shifted in successive operational cycles, the transformation module being arranged to receive a respective data component from a respective data register from each shift register and to operate on each of the received data components to produce corresponding transformed data components, wherein at least some of said data registers are associated with a respective selector switch, the setting of which selector switch in each operational cycle determines whether the associated data register is loaded with a data component from a data register in its respective shift register or with the transformed data component corresponding to its respective shift register in said operational cycle.

The provision of shift registers and switches in accordance with the invention affords a significant saving in circuit area. Further, the invention requires a relatively low number of switches (e.g. multiplexers) in the computational data paths and this allows a relatively high throughput to be achieved.

Preferably, the apparatus is arranged to perform encryption or decryption in accordance with the Rijndael cipher. More preferably, the transformation module is arranged to perform, in whole or in part, a Rijndael encryption or decryption round. Preferably, the apparatus is arranged to operate on data blocks comprising sixteen data components, each component comprising one data byte, wherein each shift register comprises four one-byte data registers. More preferably, the transformation module is arranged to perform one quarter of the Rijndael encryption or decryption round. Preferably, each switch comprises a 2-to-1 selector switch.

In a preferred embodiment, the apparatus comprises an apparatus for performing encryption in accordance with the Rijndael cipher. In an alternative embodiment, the apparatus comprises an apparatus for performing decryption in accordance with the Rijndael cipher.

A second aspect of the invention provides a method of encrypting or decrypting a data block, comprising a plurality of data components, over a plurality of operational cycles, the method comprising: loading the data components into a respective data register, each data register being one of a sequence of data registers in one of a plurality of shift registers; and in respect of each operational cycle, causing a data component from one data register of each shift register to undergo one or more data encryption or decryption operations to produce a corresponding transformed data component; and setting at least one selector switch to determine whether an associated data register is loaded with a data component from a data register in its respective shift register or with the transformed data component corresponding to its respective shift register.

A third aspect of the invention provides a computer program product comprising computer usable instructions for generating an apparatus according to the first aspect of the invention.

The apparatus of the invention may be implemented in a number of conventional ways, for example as an Application Specific Integrated Circuit (ASIC) or a Field Programmable Gate Array (FPGA). The implementation process may also be one of many conventional design methods including standard cell design or schematic entry/layout synthesis. Alternatively, the apparatus may described, or defined, using a hardware description language (HDL) such as VHDL, Verilog HDL or a targeted netlist format (e.g. xnf, EDIF or the like) recorded in an electronic file, or computer useable file.

Thus, the invention further provides a computer program, or computer program product, comprising program instructions, or computer usable instructions, arranged to generate, in whole or in part, an apparatus according to the first aspect of the invention. The apparatus may therefore be implemented as a set of suitable such computer programs. Typically, the computer program comprises computer usable statements or instructions written in a hardware description, or definition, language (HDL) such as VHDL, Verilog HDL or a targeted netlist format (e.g. xnf, EDIF or the like) and recorded in an electronic or computer usable file which, when synthesised on appropriate hardware synthesis tools, generates semiconductor chip data, such as mask definitions or other chip design information, for generating a semiconductor chip. The invention also provides said computer program stored on a computer useable medium. The invention further provides semiconductor chip data, stored on a computer usable medium, arranged to generate, in whole or in part, an apparatus according to the invention.

Other advantageous aspects of the invention will be apparent to those ordinarily skilled in the art upon review of the following description of specific embodiments and with reference to the accompanying drawings.

BRIEF DESCRIPTION OF THE DRAWINGS

Embodiments of the invention are now described by way of example and with reference to the accompanying drawings in which:

Figure 1a is a representation of data bytes arranged in a State rectangular array;

Figure 1b is a representation of a cipher key arranged in a rectangular array;

Figure 1c is a representation of an expanded key schedule;

Figure 2 is a schematic illustration of the Rijndael Block Cipher;

Figure 3 is a schematic illustration of a normal Rijndael Round;

Figure 4 is a schematic representation of a data encryption apparatus arranged in accordance with the invention;

Figure 5 is a schematic representation of a typical round transform operation;

Figures 6a to 6e illustrate in schematic form an encryption round module comprising a data scheduling apparatus arranged in accordance with the invention;

Figure 7 is a schematic representation of a data decryption apparatus arranged in accordance with the invention; and

Figures 8a to 8e illustrate in schematic form an decryption round module comprising a data scheduling apparatus arranged in accordance with the invention.

DETAILED DESCRIPTION OF THE DRAWINGS

The Rijndael algorithm is a private key, or symmetric key, DEA and is an iterated block cipher. The Rijndael algorithm (hereinafter "Rijndael") is defined in the publication "The Rijndael Block Cipher: AES proposal" by J. Daemen and V. Rijmen presented at the First AES Candidate Conference (AES1) of August 20-22, 1998, the contents of which publication are hereby incorporated herein by way of reference.

In accordance with many private key DEAs, including Rijndael, encryption is performed in multiple stages, commonly known as iterations, or rounds. Each round uses a respective sub-key, or round key, to perform its encryption operation. The round keys are derived from a primary key, or cipher key.

The data to be encrypted, sometimes known as plaintext, is divided into blocks for processing. Similarly, data to be decrypted is processed in blocks. With Rijndael, the data block length and cipher key length can be 128, 192 or 256 bits. The NIST requested that the AES must implement a symmetric block cipher with a block size of 128 bits, hence the variations of Rijndael which can operate on larger block sizes do not form part of the standard itself. Rijndael also has a variable number of rounds namely, 10, 12 and 14 when the cipher key lengths are 128, 192 and 256 bits respectively.

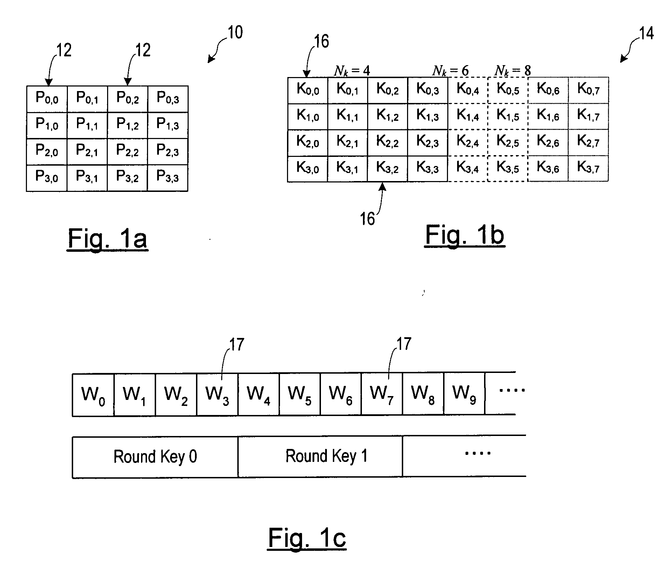

With reference to Figure 1a, the transformations performed during the Rijndael encryption operations consider a data block as a 4-column rectangular array, or State (generally indicated at 10 in Figure 1a), of 4-byte vectors 12. For example, a 128-bit plaintext (i.e. unencrypted) data block consists of 16 bytes, $B_0$, $B_1$, $B_2$, $B_3$, $B_4$... $B_{14}$, $B_{15}$. Hence, in the State 10, $B_0$ becomes $P_{0,0}$, $B_1$ becomes $P_{1,0}$, $B_2$ becomes $P_{2,0}$ ... $B_4$ becomes $P_{0,1}$ and so on. Figure 1a shows the state 10 for the standards compliant 128-bit data block length. For data block lengths of 192-bits or 256-bits, the state 10 comprises 6 and 8 columns of 4-byte vectors respectively.

With reference to Figure 1b, the cipher key is also considered to be a multi-column rectangular array 14 of 4-byte vectors 16, the number of columns, $N_k$, depending on the cipher key length. In Figure 1b, the vectors 16 headed by bytes $K_{0,4}$ and $K_{0,5}$ are present when the cipher key length is 192-bits or 256-bits, while the vectors 16 headed by bytes $K_{0,6}$ and $K_{0,7}$ are only present when the cipher key length is 256-bits.

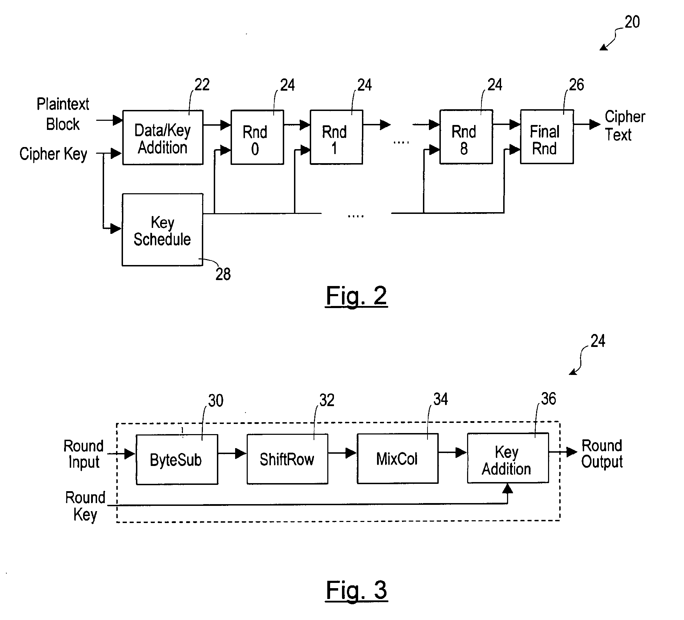

Referring now to Figure 2, there is shown, generally indicated at 20, a schematic representation of Rijndael.

The algorithm design consists of an initial data/key addition operation 22, in which a plaintext data block is added to the cipher key, followed by nine, eleven or thirteen rounds 24 when the key length is 128-bits, 192-bits or 256-bits respectively and a final round 26, which is a variation of the typical round 24. There is also a key schedule operation 28 for expanding the cipher key in order to produce a respective different round key for each round 24, 26.

Figure 3 illustrates the typical Rijndael round 24. The round 24 comprises a ByteSub transformation 30, a ShiftRow transformation 32, a MixColumn transformation 34 and a Round Key Addition 36. The ByteSub transformation 30, which is also known as the *s-box* of the Rijndael algorithm, operates on each byte in the State 10 independently.

The s-box 30 involves finding the multiplicative inverse of each byte in the finite, or Galois, field $GF(2^8)$. An affine transformation is then applied, which involves multiplying the result of the multiplicative inverse by a matrix M (as defined in the Rijndael specification) and adding to the hexadecimal number '63' (as is stipulated in the Rijndael specification).

In the ShiftRow transformation 32, the rows of the State 10 are cyclically shifted to the left. Row 0 is not shifted, row 1 is shifted 1 place, row 2 by 2 places and row 3 by 3 places.

The MixColumn transformation 34 operates on the columns of the State 10. Each column, or 4-byte vector 12, is considered a polynomial over $GF(2^8)$ and multiplied modulo $x^4+1$ with a fixed polynomial c(x), where,

$$c(x) = \text{'03'}\,x^3 + \text{'01'}\,x^2 + \text{'01'}x + \text{'02'} \qquad (1)$$

(the inverted commas surrounding the polynomial coefficients signifying that the coefficients are given in hexidecimal).

The MixCol transformation 34 operates on each column (ColO to Col3) of the State 10. Each column is considered a polynomial over $GF(2^8)$ and multiplied modulo $x^4+1$ with a fixed polynomial c(x) as set out in equation [1] for encryption and equation [2] below for decryption. This can be considered as a matrix multiplication as follows:

During encryption:

$$\begin{bmatrix} b_0 \\ b_1 \\ b_2 \\ b_3 \end{bmatrix} = \begin{bmatrix} 02 & 03 & 01 & 01 \\ 01 & 02 & 03 & 01 \\ 01 & 01 & 02 & 03 \\ 03 & 01 & 01 & 02 \end{bmatrix} \begin{bmatrix} a_0 \\ a_1 \\ a_2 \\ a_3 \end{bmatrix} \qquad [3]$$

During decryption:

$$\begin{bmatrix} b_0 \\ b_1 \\ b_2 \\ b_3 \end{bmatrix} = \begin{bmatrix} 0E & 0B & 0D & 09 \\ 09 & 0E & 0B & 0D \\ 0D & 09 & 0E & 0B \\ 0B & 0D & 09 & 0E \end{bmatrix} \begin{bmatrix} a_0 \\ a_1 \\ a_2 \\ a_3 \end{bmatrix} \quad [4]$$

Where the input to the MixCol transformation 34 may be denoted in State format as follows:

| | Col 0 | Col 1 | Col 2 | Col 3 |
|---|---|---|---|---|
| **Row 0** | $a_0$ | $a_4$ | $a_8$ | $a_{12}$ |
| **Row 1** | $a_1$ | $a_5$ | $a_9$ | $a_{13}$ |
| **Row 2** | $a_2$ | $a_6$ | $a_{10}$ | $a_{14}$ |
| **Row 3** | $a_3$ | $a_7$ | $a_{11}$ | $a_{15}$ |

And the output of the output may be denoted in State format as:

| | Col 0 | Col 1 | Col 2 | Col 3 |
|---|---|---|---|---|
| **Row 0** | $b_0$ | $b_4$ | $b_8$ | $b_{12}$ |
| **Row 1** | $b_1$ | $b_5$ | $b_9$ | $b_{13}$ |
| **Row 2** | $b_2$ | $b_6$ | $b_{10}$ | $b_{14}$ |
| **Row 3** | $b_3$ | $b_7$ | $b_{11}$ | $b_{15}$ |

Equations [3] and [4] illustrate the matrix multiplication for the first column [$a_0$-$a_3$] of the input State to produce the first column [$b_0$-$b_3$] of the output State. The MixCol transformation performs the same multiplication for the remaining columns of the input state to produce corresponding output State columns. The values given in the multiplication matrices in [3] and [4] correspond respectively with the coefficients of the fixed polynomial c(x) given in equations [1] and [2]. These values are specific to the Rijndael algorithm.

Finally in Round Key Addition 36, the State 10 bytes and the round key bytes are added by a bitwise XOR operation.

In the final round 26, the MixColumn transformation 34 is omitted.

The ByteSub, ShiftRow, and MixCol transformations are well documented in the Rijndael specification and there are a number of conventional ways in which they each may be implemented.

The Rijndael key schedule 28 consists of two parts: Key Expansion and Round Key Selection. Key Expansion involves expanding the cipher key into an expanded key, namely a linear array 15 (Fig. 1c) of 4-byte vectors or words 17, the length of the array 15 being determined by the data block length, $N_b$, (in bytes) multiplied by the number of rounds, $N_r$, plus 1, i.e. array length = $N_b * (N_r + 1)$. In standards-compliant Rijndael, the data block length is four words, $N_b = 4$. When the key block length, $N_k$ = 4, 6 and 8, the number of rounds is 10, 12 and 14 respectively. Hence the lengths of the expanded key are as shown in Table 1 below.

Table 1.

| Length of Expanded Key for Varying Key Sizes | | | |
|---|---|---|---|
| **Data Block Length, $N_b$** | 4 | 4 | 4 |
| **Key Block Length, $N_k$** | 4 | 6 | 8 |
| **Number of Rounds, $N_r$** | 10 | 12 | 14 |

Table 1. (continued)

| Length of Expanded Key for Varying Key Sizes | | | |
|---|---|---|---|
| **Expanded Key Length** | *44* | *52* | *60* |

The first $N_k$ words of the expanded key comprise the cipher key. When $N_k$ = 4 or 6, each subsequent word, W[i], is found by XORing the previous word, W[i-1], with the word $N_k$ positions earlier, W[i-$N_k$]. For words 17 in positions which are a multiple of $N_k$, a transformation is applied to W[i-1] before it is XORed. This transformation involves a cyclic shift of the bytes in the word 17. Each byte is passed through the Rijndael s-box 30 and the resulting word is XORed with a round constant stipulated by Rijndael (see *Rcon(i)* function described below). However, when $N_k$ = 8, an additional transformation is applied: for words 17 in positions which are a multiple of (($N_k$*i) + 4), each byte of the word, W[i-1], is passed through the Rijndael s-box 30.

The round keys are selected from the expanded key 15. In a design with $N_r$ rounds, $N_r$ +1 round keys are required.
For example a 10-round design requires 11 round keys. Round key 0 comprises words W[0] to W[3] of the expanded key 15 (i.e. round key 0 corresponds with the cipher key itself) and is utilised in the initial data/key addition 22, round key 1 comprises W[4] to W[7] and is used in round 0, round key 2 comprises W[8] to W[11] and is used in round 1 and so on. Finally, round key 10 is used in the final round 26.

The decryption process in Rijndael is effectively the inverse of its encryption process. Decryption comprises an inverse of the final round 26, inverses of the rounds 24, followed by the initial data/key addition 22. The data/key addition 22 remains the same as it involves an XOR operation, which is its own inverse. The inverse of the round 24, 26 is found by inverting each of the transformations in the round 24, 26. The inverse of ByteSub 30 is obtained by applying the inverse of the affine transformation and taking the multiplicative inverse in GF($2^8$) of the result. In the inverse of the ShiftRow transformation 32, row 0 is not shifted, row 1 is now shifted 3 places, row 2 by 2 places and row 3 by 1 place. The polynomial, c(x), used to transform the State 10 columns in the inverse of MixColumn 34 is given by,

$$c(x) = \text{'0B'}\ x^3 + \text{'0D'}\ x^2 + \text{'09'}\ x + \text{'0E'} \qquad (2)$$

Similarly to the data/key addition 22, Round Key addition 36 is its own inverse. During decryption, the key schedule 28 does not change, however the round keys constructed for encryption are now used in reverse order. For example, in a 10-round design, round key 0 is still utilized in the initial data/key addition 22 and round key 10 in the final round 26. However, round key 1 is now used in round 8, round key 2 in round 7 and so on.

A number of different architectures can be considered when designing an apparatus or circuit for implementing encryption algorithms. These include Iterative Looping (IL), where only one data processing module is used to implement all of the rounds. Hence for an n-round algorithm, n iterations of that round are carried out to perform an encryption, data being passed through the single instance of data processing module n times. Loop Unrolling (LU) involves the unrolling of multiple rounds. Pipelining (P) is achieved by replicating the round i.e. devising one data processing module for implementing the round and using multiple instances of the data processing module to implement successive rounds. Sub-Pipelining (SP) may be carried out on a partially pipelined design when the round is complex. It decreases the pipeline's delay between stages but increases the number of clock cycles required to perform an encryption. The present invention relates particularly to Iterative Loop architecture implementations.

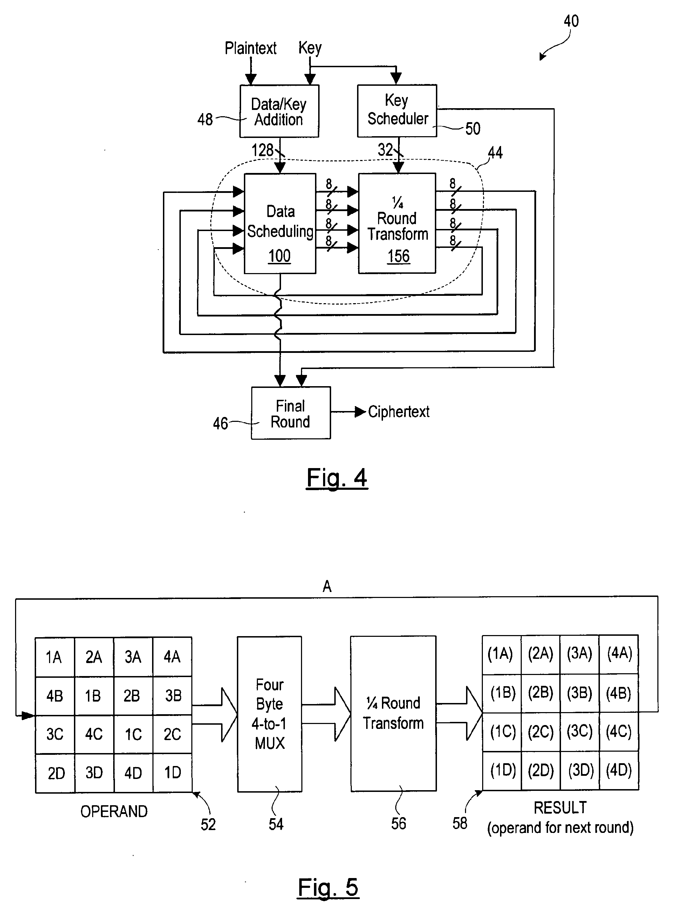

Figure 4 shows, in schematic form, a data encryption apparatus generally indicated at 40. The apparatus 40 is arranged to receive a plaintext input data block (shown as "plaintext" in Figure 4) and a cipher key (shown as "key" in Figure 4) and to produce, after a number of encryption rounds, an encrypted data block (shown as "ciphertext" in Figure 4).

The apparatus 40 comprises a data/key addition module 48 for performing the data/key addition operation 22 (Figure 2). The Data/Key Addition module 48 comprises an XOR component (not shown) arranged to perform a bitwise XOR operation of each byte $B_i$ of the State 10 comprising the input plaintext, with a respective byte $K_i$ of the cipher key.

The apparatus 40 further includes a data processing module in the form of a round module 44 for implementing the normal encryption rounds 24. The round module 44 comprises a round transformation module 156 and a data scheduling apparatus 100 according to the invention, each of which is described in more detail hereinafter. In the illustrated example, the data block length $N_b$ is assumed to be 128-bits. The data/key addition module 48 provides, to the apparatus 100, the result of the data/key addition operation which, in this example, comprises 128-bits of data. As is described in more detail below, this data is loaded into a plurality of data registers (not shown in Figure 4) within the apparatus 100 and then supplied, 32-bits at a time (4 bytes in parallel, see Figure 4), to the transformation module 156. The transformation module 156 is arranged to perform encryption operations on the received data and to produce output data which, in the present example, comprises 32-bits (4 bytes in parallel as shown in Figure 4). The output data of the transformation module 156 is supplied to the scheduling apparatus 100 whereupon the data is loaded into registers within the apparatus 100. The scheduling apparatus 100 is arranged, in accordance with the invention, to control the sending and receiving of data to and from the transformation module 156 in order to correctly implement the encryption algorithm. In the preferred embodiment the scheduling apparatus 100 is arranged to implement, in particular, the ShiftRow operation of Rijndael.

The apparatus 40 also includes a key scheduler 50 for generating sub-keys from the cipher key. The key scheduler 50 is arranged to provide the sub-keys to the transform module 156 as required. The key scheduler 50 may be implemented in a number of conventional ways and is preferably arranged to supply the transformation module 156 with the appropriate 32-bits of a respective sub-key in each clock cycle.

The preferred embodiment of the apparatus 40 further includes a final round module 46 arranged to implement the Rijndael final round 26 in conventional manner. Once the round module 44 has finished performing the required normal encryption rounds 24, the resulting partially encrypted data is provided to the final round module 46. Preferably, the final round module 46 is arranged to operate on data 32-bits at a time so that the resulting ciphertext is produced over four clock cycles.

As is described in more detail below, the transformation module 156 operates on a portion of a State data array at a time (in this example one quarter of the State array namely, 32 bits out of 128 bits) and so each encryption round takes a plurality of cycles to complete (four cycles in the present example). Once all of the required encryption rounds are completed, the values contained in the registers within the scheduling apparatus 100 comprise the ciphertext.

The present invention concerns in particular the efficient implementation of the encryption or decryption rounds 24. While the invention is particularly suited to, and is described herein in the context of, implementation of Rijndael, a skilled person will appreciate that the invention may be used advantageously in the implementation of other data encryption/decryption algorithms of similar structure to Rijndael.

One way to reduce the amount of resources required to implement a round 24, 26 is to operate on only a part of the state 10 at a time using a given resource and then to process the remaining parts of the state 10 one after the other using the same resource. For example, for the 4 column state 10 depicted in Figure 1a, the data may be operated on column-by-column i.e. only 32-bits of the 128-bit input state 10 are operated on at any one time. In the present example, this means that each round is performed in 4 clock cycles (since there are 4 columns). This reduces the required resources, e.g. hardware gate count, by approximately 75% for one round transform.

Figure 5 shows a schematic view of how a round 24, 26 may be implemented on a column-by-column basis. The example of Figure 5 assumes that the operand 52 is a 128-bit state array i.e. 16 bytes of data arranged in four columns of 4-byte vectors 12. The operand 52 is supplied to a bank 54 of switches, or multiplexers, which are arranged to perform the ShiftRow transformation 32. Typically, the bank 54 comprises a plurality of multiplexers in parallel. In the present example, the bank 54 comprises four 4-to-1 byte multiplexers (not shown), each multiplexer being arranged to select one byte from a respective row of the operand 52 in accordance with the ShiftRow transformation 32. The output of the bank 54 comprises the four bytes selected by the respective multiplexers. This output is supplied to a transform module 56 that is arranged to implement the ByteSub transformation 30, the MixCol transformation 34 and the Key Addition operation 36 - these transformations/operations may be performed in any convenient conventional manner. In the arrangement shown in Figure 5, the transform module 56 operates on 4 bytes at a time. This is compatible with the MixCol transformation 34 which is applied to each column of the state 10. The ByteSub transform 30 is typically performed on one byte at a time and so the transform module 56 preferably includes four instances of the resources (e.g. Look-Up Tables (LUTs)) required to implement the ByteSub transformation 30. The output of the transform module 56 comprises four bytes of data corresponding to one column or vector 12' of a result 58, the result 58 taking the form of a four column state array. Thus, in four successive clock cycles the whole 16 byte result 58 is produced. Hence, in each clock cycle, the bank 54 and the transform module 56 perform a quarter of the round transforms i.e. they perform the required round transforms on one quarter of the input operand 52 to produce one quarter of the result 58. The arrow A in Figure 5 is used to indicate that the result 58 of one round is used as the input operand 52 of the next round.

In Figure 5 for illustrative purposes, each byte of the operand 52 and result 58 is labelled to show how the bank 54 of multiplexers selects bytes from each row of the operand 52 in order to implement the ShiftRow transformation 32. The label of each byte includes a suffix A, B, C or D indicating in which row of the state 10 the byte appears: A denotes the first row, B denotes the second row, and so on. Each label also includes a numeral 1, 2, 3 or 4 to differentiate between column positions in the state 10. The labels of the bytes in the result 58 are given in parentheses () to distinguish them from the bytes of the input operand 52.

It is assumed that the bank 54 of muiltiplexers and the transform module 56 operate on input bytes 1A, 1B, 1C and 1D in the first cycle to produce output bytes (1A), (2A), (3A) and (4A). In the second cycle, 2A, 2B, 2C and 2D are operated on to produce (2A), (2B), (2C) and (2D). In the third cycle, 3A, 3B, 3C and 3D are operated on to produce (3A), (3B), (3C) and (3D). In the fourth cycle, 4A, 4B, 4C and 4D are operated on to produce (4A), (4B), (4C) and (4D). The arrangement of the labels 1A to 4D in Figure 5 shows how the multiplexers in the bank 54 are required to select bytes from the respective rows of the operand 52 in order to implement the ShiftRow transformation 32. For example, in the first cycle, the multiplexer associated with the first row of the operand 52 selects the byte from the first column of that row, i.e. byte 1A, while the multiplexer associated with the second row of the operand 52 selects the byte from the second column of that row, i.e. byte 1B, and so on. In the second cycle, the multiplexer associated with the first row of the operand 52 selects the byte from the second column of that row, i.e. byte 2A, while the multiplexer associated with, say, the fourth row of the operand 52 selects the byte from the first column of that row, i.e. byte 2D, and so on.

In the arrangement of Figure 5, the bank 54 comprises four 4-to-1 byte multiplexers. This is considered to be costly in terms of area. It is also considered to be desirable to have relatively few multiplexers in the computational data path as multiplexers have the effect of reducing throughput.

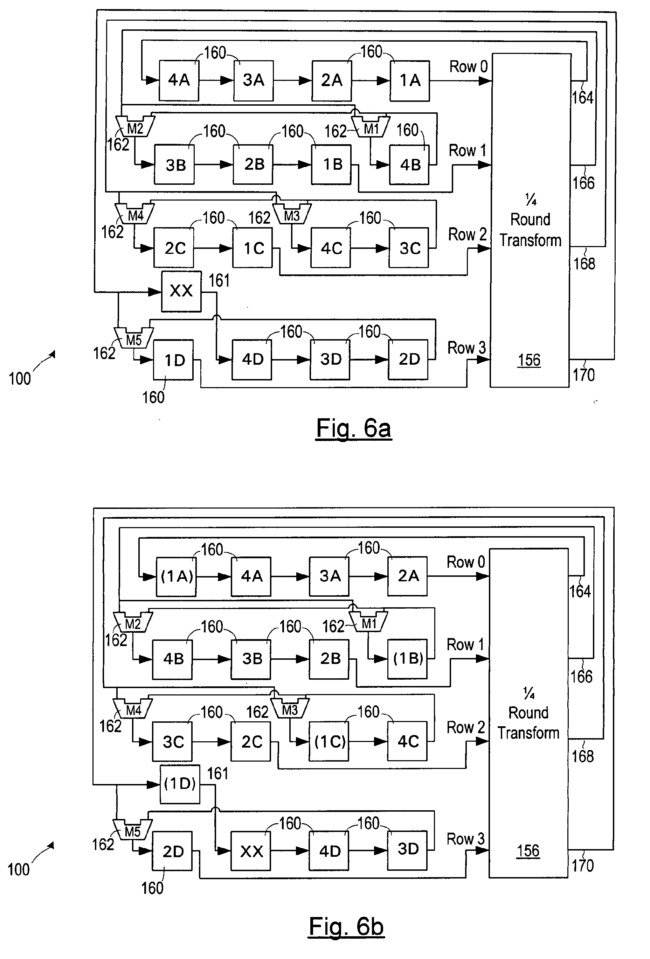

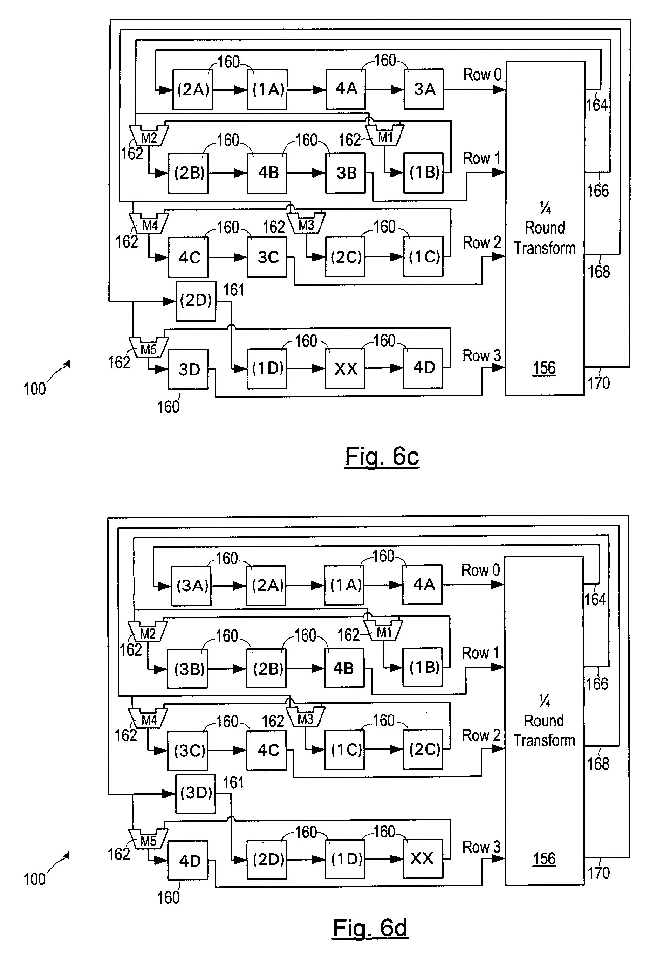

Figures 6a to 6e illustrate the scheduling apparatus 100 for implementing a data encryption round according to one aspect of the invention. The round transformation module 156 is also shown in Figures 6a to 6e.

The apparatus 100 comprises a plurality of data registers 160, one register in respect of each component of the data block, or operand 52, upon which the transformation module 156 is required to operate. In the present example, the data block components comprise bytes and the operand 52 comprises 16 bytes. Hence, in Figures 6a to 6e, the apparatus 100 comprises 16 byte data registers 160. The data registers 160 are arranged as a plurality of shift registers, one for each row of the data block (State array), each shift register comprising a sequence of data registers 160. Preferably, the registers 160 are implemented as four four-byte shift registers, each shift register implementing a respective row (Row 0, Row 1, Row 2 and Row3) of four registers 160. Hence each register 160 comprises a respective 1-byte storage location, or register, within one of the four-byte shift registers.
The apparatus 100 preferably includes a further data register 161 which serves to delay the shifting of data in the last row (Row 3) of registers 160 as is described in more detail below. The transformation module 156 comprises apparatus (not shown) for performing the required encryption/decryption operations, as described in relation to the transformation module 56 of Figure 5.

The apparatus 100 further comprises a plurality of 2-to-1 selector switches in the form of 2-to-1 multiplexers (or MUXes) 162 which, in Figures 6a to 6e are labelled M1, M2, M3, M4 and M5.

The apparatus 100 performs the required round transformations in four successive operational cycles, or clock cycles, the transformation module 156 operating on one quarter of the input operand in each clock cycle. The transformation module 156, the data registers 160 and the 2-to-1 multiplexers are all synchronised to a common clock signal (not illustrated). After each cycle, outputs 164, 166, 168, 170 of the transformation module 156 (which carry respective transformed data bytes) are fed back into the array of registers 160 as shown in Figures 6a to 6e. The 2-to-1 multiplexers 162 are controlled to load the registers 160, either from the outputs 164-170 of the transformation module 156 or from a data register 160 in the same row, or shift register. The arrangement is such that the registers 160 are loaded over successive clock cycles with the particular bytes illustrated in Figures 6a to 6e.

The operation of the apparatus 100 is now described with reference to Figures 6a to 6e. Initially, the registers 160 are loaded with the plaintext data to be encrypted which, in this case, comprises 16 bytes of data, one byte being loaded into a respective register 160. For a 128-bit data block, and where the registers 160 are implemented as four four-byte registers, the data is conveniently shifted into each of the four four-byte registers over four clock cycles - in each of the four clock cycles, a respective byte will be loaded into each of the four four-byte registers. Loading data into the registers 160 can be performed in any conventional manner and, in Figures 6a to 6e, loading inputs are not illustrated for clarity. The plaintext bytes are arranged in the registers 160 in their natural order with respect to one another i.e., referring to Figures 1a and 6a, bytes $P_{0,0}$, $P_{1,0}$, $P_{2,0}$ and $P_{3,0}$ are loaded into the rightmost column of registers 160 as viewed in Figure 6a, bytes $P_{0,1}$, $P_{1,1}$, $P_{2,1}$ and $P_{3,1}$ are loaded into the next adjacent column to the left, bytes $P_{0,2}$, $P_{1,2}$, $P_{2,2}$ and $P_{3,2}$ are loaded into the next adjacent column to the left and bytes $P_{0,3}$, $P_{1,3}$, $P_{2,3}$ and $P_{3,3}$ are loaded into the leftmost column of registers 160.

The labelling of the registers 160 in Figures 6a to 6e shows how the bytes in the respective registers are processed during the round transformation. Figure 6a illustrates the register contents in a first cycle, Cycle 0, in which the first four bytes to be operated on by the transform module 156 are bytes labelled 1A, 1B, 1C and 1D and it may be seen from Figure 6a from which registers 160 these bytes are taken. This arrangement corresponds with the foregoing description relating to labelling of the operand 52 in Figure 5.

In the following description of Figures 6b to 6e, for convenience, the contents of the registers 160 are described on a row-by-row basis using the row number notation Row 0 to Row 3 given in the drawings. It will be understood that the term 'row' is a relational term and does not necessarily imply a particular spatial arrangement. Each row of data registers 160 corresponds to a respective shift register which in turn corresponds with a row of the data block (when considered in state array form) being operated on. Thus, the 'first' register 160 in a given row is the register 160 that takes the first byte of the corresponding state array row, the 'final' register is the register 160 that takes the final byte, and so on.

Figure 6b shows the register contents in a second cycle, Cycle 1. In Row 0 of the registers 160, new byte (1A) (which was created by the transformation module 156 during Cycle 0 and is available on a first output 164 of the transformation module 156) is entered into the first register 160 of Row 0. The remaining bytes of Row 0 are shifted to a respective adjacent register as shown by the arrows. Thus, byte 2A is the next byte to be supplied to the transformation module 156. In Row 1, M1 is arranged to select new byte (1B) from a second output 166 of the transformation module 156 for input to the final register of Row 1. M2 is arranged to select byte 4B from the final register of Row 1 and to load this byte into first register of Row 1. The remaining bytes of Row 1 are shifted to a respective adjacent register as shown. Thus, Byte 2B is the next byte to be supplied to the transformation module 156 from Row 1. In Row 2, M3 is arranged to load new byte (1C) from output 168 of the transformation module 156 into the second register 160 from the right in Row 2. M4 is arranged to select byte 3C from the final register 160 and to load same into the first register of Row 2. The remaining bytes of Row 2 are shifted to a respective adjacent register as shown. Thus, Byte 2C is the next byte to be supplied to the transformation module 156 from Row 2. With respect to Row 3, M5 is arranged to select the final byte, byte 2D, from the Row 3 registers 160 as the input to the first register 160 of Row 3. The new byte (1D) from output 170 of the transformation module is entered into the optional register 161. The remaining bytes of Row 3 are shifted to a respective adjacent register as shown. Thus, Byte 2D is the next byte to be supplied to the transformation module 156 from Row 3.

Figure 6c shows the register contents in a third cycle, Cycle 2. In Row 0 of the registers 160, new byte (2A) (which was created by the transformation module 156 during Cycle 1 and is available on a first output 164 of the transformation module 156) is entered into the first register 160 of Row 0. The remaining bytes of Row 0 are shifted to a respective adjacent register as shown. Thus, byte 3A is the next byte on which transformation module 156 operates from Row 0. In Row 1, M1 is arranged to select byte (1B) for input to the final register 160 of Row 1 (i.e. there is no change to the contents of this register in Cycle 2). M2 is arranged to select new byte (2B) from output 166 and to load this byte into first register of Row 1. The remaining bytes of Row 1 are shifted to a respective adjacent register as shown. Thus, byte 3B is the next byte to be supplied to the transformation module 156. In Row 2, M3 is arranged to load new byte (2C) from output 168 of the transformation module 156 into the second register 160 from the right in Row 2. M4 is arranged to select byte 4C from the final register 160 and to load same into the first register of Row 2. The remaining bytes of Row 2 are shifted to a respective adjacent register as shown. Thus, Byte 3C is the next byte to be supplied to the transformation module 156. With respect to Row 3, M5 is arranged to select the final byte, byte 3D, from the Row 3 registers 160 as the input to the first register 160 of Row 3. The new byte (2D) from output 170 of the transformation module is entered into the optional register 161. The remaining bytes of Row 3 are shifted to a respective adjacent register as shown. Thus, the next byte to be supplied to the transformation module 156 from Row 3 is byte 3D.

Figure 6d shows the register contents in a fourth cycle, Cycle 3. In Row 0 of the registers 160, new byte (3A) (which was created by the transformation module 156 during Cycle 2 and is available on a first output 164 of the transformation module 156) is entered into the first register 160 of Row 0. The remaining bytes of Row 0 are shifted to a respective adjacent register as shown. Thus, byte 4A is the next byte on which transformation module 156 operates from Row 0. In Row 1, M1 is arranged to select byte (1B) for input to the final register 160 of Row 1 (i.e. there is no change to the contents of this register in Cycle 3). M2 is arranged to select new byte (3B) from output 166 and to load this byte into first register of Row 1. The remaining bytes of Row 1 are shifted to a respective adjacent register as shown. Thus, byte 4B is the next byte to be supplied to the transformation module 156 from Row 1. In Row 2, M4 is arranged to load new byte (3C) from output 168 of the transformation module 156 into the first register 160 in Row 2. M3 is arranged to select byte (1C) from the final register 160. The remaining bytes of Row 2 are shifted to a respective adjacent register as shown. Thus, Byte 4C is the next byte to be supplied to the transformation module 156 from Row 2. With respect to Row 3, M5 is arranged to select the final byte, byte 4D, from the Row 3 registers 160 as the input to the first register 160 of Row 3. The new byte (3D) from output 170 of the transformation module is entered into the optional register 161. The remaining bytes of Row 3 are shifted to a respective adjacent register as shown. Thus, the next byte to be supplied to the transformation module 156 from Row 3 is byte 4D.

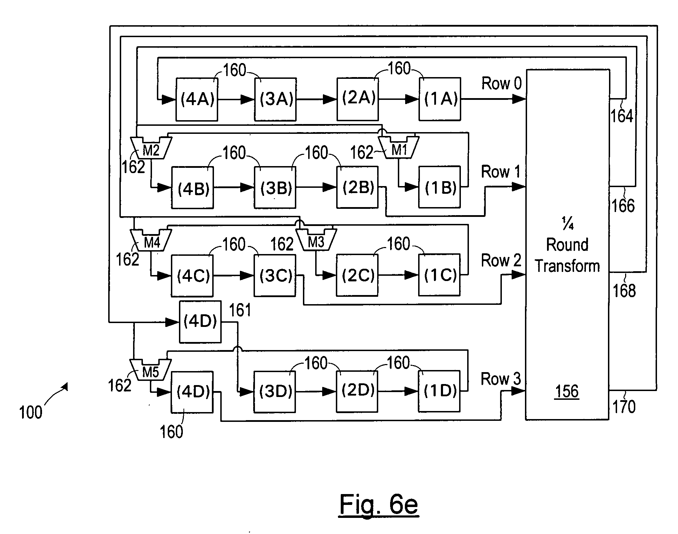

Figure 6e shows the register contents in a fifth cycle, Cycle 4. In Row 0 of the registers 160, new byte (4A) (which was created by the transformation module 156 during Cycle 3 and is available on a first output 164 of the transformation module 156) is entered into the first register 160 of Row 0. The remaining bytes of Row 0 are shifted to a respective adjacent register as shown. Thus, byte (1A) is the next byte on which transformation module 156 operates from Row 0. In Row 1, M1 is arranged to select byte (1B) for input to the final register 160 of Row 1 (i.e. there is no change to the contents of this register in Cycle 4). M2 is arranged to select new byte (4B) from output 166 and to load this byte into first register of Row 1. The remaining bytes of Row 1 are shifted to a respective adjacent register as shown. Thus, byte (2B) is the next byte to be supplied to the transformation module 156 from Row 1. In Row 2, M4 is arranged to select new byte (4C) from output 168 of the transformation module 156 into the second register 160 from the right in Row 2. M3 is arranged to select byte (2C) from the final register 160. The remaining bytes of Row 2 are shifted to a respective adjacent register as shown. Thus, Byte (3C) is the next byte to be supplied to the transformation module 156. With respect to Row 3, M5 is arranged to select the new byte (4D) from output 170 as the input to the first register 160 of Row 3. The new byte (4D) from output 170 of the transformation module is also entered into the optional register 161. The remaining bytes of Row 3 are shifted to a respective adjacent register as shown. Thus, the next byte to be supplied to the transformation module 156 from Row 3 is byte (4D).

Thus, each round is performed in four consecutive clock cycles: Cycle 0 to Cycle 1; Cycle 1 to Cycle 2; Cycle 2 to Cycle 3; and Cycle 3 to Cycle 4. Successive Rounds may be performed consecutively, wherein the encrypted data block is comprised of the values contained in the registers 160 after the final round is completed. In this connection, it is noted that the values of Cycle 4 in one round are the Cycle 0 values of the following round.

Conveniently, after the encryption rounds are completed, the data in the registers 160 are passed in 32-bit blocks to the final round module (Figure 4) after which they may be output over four clock cycles serially in 32-bit blocks.

In an alternative embodiment (not illustrated), the optional register 161 is removed and shift control (i.e. register control) is added so that the values in the second, third and fourth registers 160 in Row 3 are not shifted in the last cycle. However, controlling the loading of a register in this way normally adds a switch or MUX to its input port (unless the register primitive has load enable control). In the apparatus of Figure 6, this would require and additional three 2-to-1 MUXes in place of register 161 and, in ASIC technology, three 2-to-1 MUXes are normally larger than one register. Therefore, the embodiment of Figures 6a to 6e is preferred.

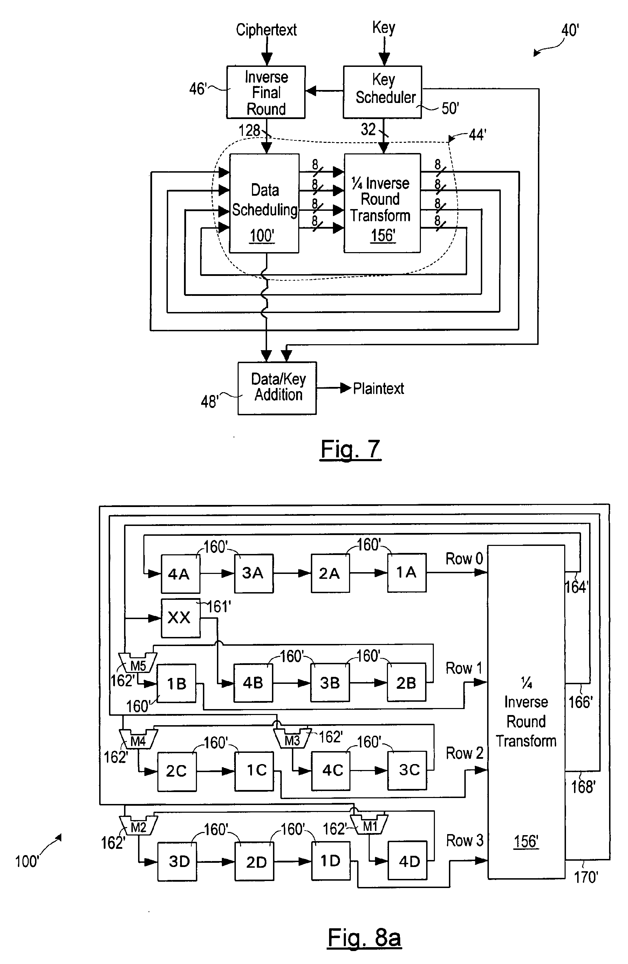

The present invention applies equally to the implementation of data encryption or data decryption rounds and may therefore be used, for example, in the implementation of the Inverse Round transformation of a Rijndael decryption apparatus. Figure 7 shows a schematic representation of a data decryption apparatus, generally indicated at 40', for implementing, in particular, Rijndael decryption. The apparatus 40' is arranged to receive a ciphertext input data block (shown as "ciphertext" in Figure 7) and an inverse cipher key (shown as "key" in Figure 4) and to produce, after a number of decryption rounds, a decrypted data block (shown as "plaintext" in Figure 7). The decryption apparatus 40' is of generally similar design to the encryption apparatus 40 and operates in a similar manner. However, the relative positions of the data/key addition module 48' and the final round module 46' are reversed in comparison with the data encryption module 40. Also, the final round module 46' and the transformation module 156' are arranged to implement the Rijndael inverse final round and inverse normal round respectively. Further, since the Rijndael ShiftRow and Inverse ShiftRow operations are different, the arrangement of switches, or multiplexers, within the data scheduling apparatus 100' is different (the shift operation performed on Rows 0 and 2 are the same in encryption and decryption. The shift operation carried out on row 1 during encryption is equivalent to the inverse shift operation carried out on Row 3 during decryption. Also the shift operation carried out on row 3 during encryption is equivalent to the inverse shift row operation carried out on row 1 during decryption).

Figures 8a to 8e illustrate the scheduling apparatus 100' for implementing a data decryption round according to one aspect of the invention. The inverse round transformation module 156' is also shown in Figures 8a to 8e. As the scheduling apparatus 100' is generally similar in design to the scheduling apparatus 100, similar reference numerals are used to indicate like parts. The operation of the scheduling apparatus 100' is now described with reference to Figures 8a to 8e.

Figure 8a illustrates the register 160' contents in cycle 0. It will be seen that the first four bytes to be operated on are 1A, 1B, 1C and 1D.

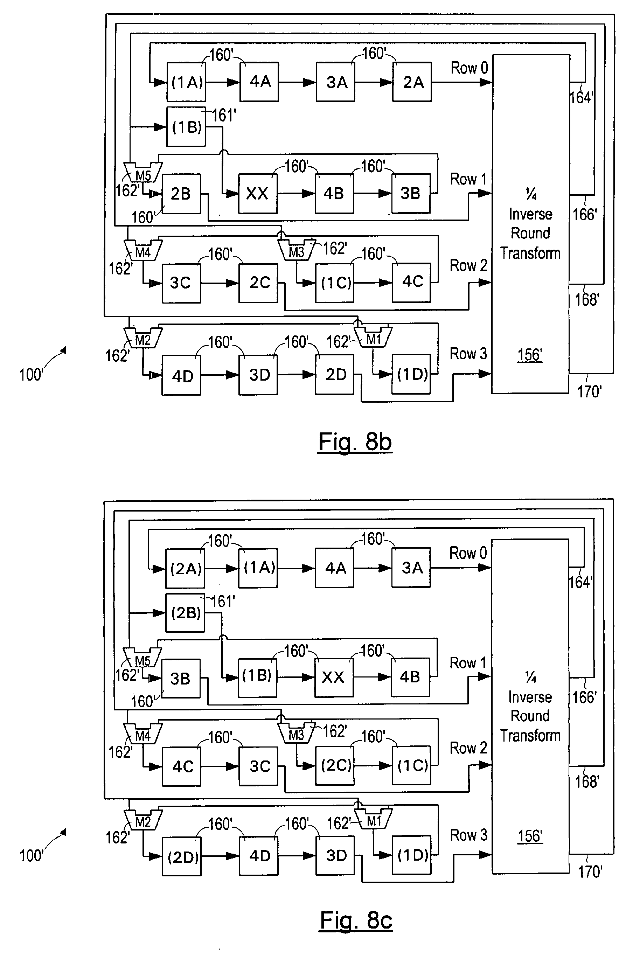

Figure 8b illustrates the register contents in cycle 1. In Row 0 of the registers 160', byte 2A is the next byte on which to be operated. New byte (1A) is entered into the shift register at the beginning of Row 0. In Row 1, M5 selects final byte in the register for Row 1, namely byte 2B. New byte (1B) is entered into the optional register *161'.* In Row 2, M3 selects new byte (1C) and M4 selects final byte in the Row 2 shift register, namely byte 3C. In Row 3, M1 selects new byte (1D) and M2 selects byte 4D from the final register location in Row 3.

Figure 8c illustrates the register contents in cycle 2. In Row 0, byte 3A is the next byte to be operated on. New byte (2A) is entered into the first (register) location of the Row 0 shift register. In Row 1, M5 selects final byte in register, byte 3B, and new byte (2B) is entered into register *161'.* In Row 2, M3 selects new byte (2C) and M4 selects final byte in Row 3 register, namely byte 4C. In Row 3, M1 selects byte (1D) from the final Row 3 register. M2 selects new byte (2D).

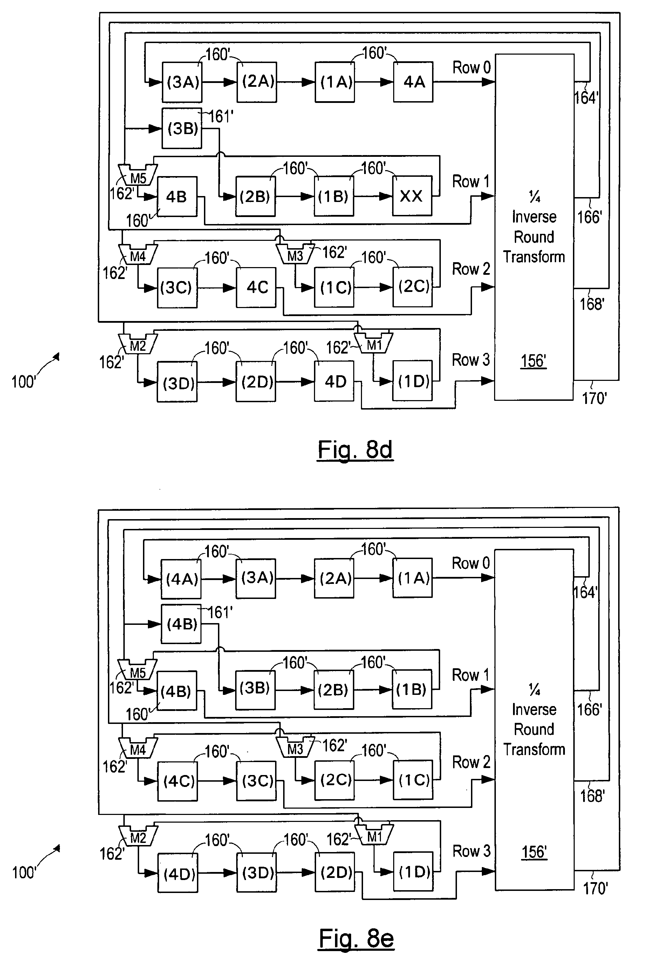

Figure 8d illustrates the register contents in cycle 3. In Row 0, byte 4A is the next byte on which to be operated. New byte (3A) is entered into the first register of Row 0. In Row 1, M5 selects final byte in register, byte 4B. New byte (3B) is entered into register *161'.* In Row 2, M3 selects final byte in register, byte (1C). M4 selects new byte (3C). In Row 3, M1 selects final byte in the register, byte (1D). M2 selects new byte (3D).

Figure 8e illustrates the register contents in cycle 4. In Row 0, byte (1A) is the next byte on which to be operated. New byte (4A) is entered into the Row 0 shift register. In Row 1, M5 selects new byte (4B). New byte (4B) is entered into register 161'. In Row 2, M3 selects final byte in register, byte (2C). M4 selects new byte (4C). In Row 3, M1 selects final byte in the register, byte (1D). M2 selects new byte (4D).

As before, cycle 4 of one round serves as cycle 0 of the following round. Also, the extra register 161', in Row 1 could be removed and shift control added so that the values in the subsequent registers 160' in Row 1 are not shifted in the last cycle. However, controlling the loading of a register adds a multiplexer to its input port (unless the register primitive has load enable control) and three 2-to-1 MUXes are larger than one register in ASIC technology. Thus, the arrangement shown in Figures 8a to 8e is preferred.

It will be observed that implementation of the encryption/decryption round in accordance with the invention removes MUXes, or other switching devices, from the computational data paths when compared with conventional arrangements (see, for example, Figure 5). This allows a higher design throughput to be achieved. Moreover, since the apparatus 100 uses 2-to-1 switches, which are smaller than the 4-to-1 switches required by the arrangement shown in Figure 5, the apparatus 100 is smaller. A hardware gate count comparison between a typical arrangement of the type shown in Figure 5 and the apparatus 100 of the invention is provided in Table 1 below.

Table 1.

| Hardware Gate Count Comparison between Typical Implementation and Invention. | | |
|---|---|---|
| **Target Process** | **4-to-1 Mux based** | **Invention** |
| ASIC | 7644 gates* | 5701 gates* |
| Xilinx FPGA (VIRTEX-E) | 397 LUTs, 2 BRAMs | 258 LUTs, 2 BRAMs |
| Altera CPLD (APEX20KE) | 472 LCs, 4 ESBs | 280 LCs, 4 ESBs |

* Same timing constraint applied

The foregoing description relates to the implementation of the Rijndael encryption round where the data block length, $N_b$, is 128-bits. It will be understood that the invention is not limited for use in the implementation of the Rijndael cipher and may be used with similarly structured ciphers. Further, the invention is not limited to use where the data block length is 128-bits. A skilled person will appreciated that the arrangements of the invention described and illustrated above may be modified to implement Rijndael when the data block length is 192 or 256-bits. For 192-bits, an additional two columns of four registers would be required in the apparatus of Figures 6a to 6e, while for 256-bits, an additional four columns of registers would be required.

The preferred implementation of the invention is on FPGA. However, the apparatus of the invention may alternatively be implemented on other conventional devices such as other Programmable Logic Devices (PLDs) or an ASIC (Application Specific Integrated Circuit).

The invention is not limited to the embodiments described herein which may be modified or varied without departing from the scope of the invention.

## Claims

1. An apparatus for encrypting or decrypting a data block comprising a plurality of data components over a plurality of operational cycles, the apparatus comprising a transformation module arranged to perform one or more encryption or decryption operations in each operational cycle; and a plurality of shift registers each comprising a sequence of data registers through which data components are shifted in successive operational cycles, the transformation module being arranged to receive a respective data component from a respective data register from each shift register and to operate on each of the received data components to produce corresponding transformed data components, wherein at least some of said data registers are associated with a respective selector switch, the setting of which selector switch in each operational cycle determines whether the associated data register is loaded with a data component from a data register in its respective shift register or with the transformed data component corresponding to its respective shift register in said operational cycle.

2. An apparatus as claimed in Claim 1, wherein the apparatus is arranged to perform encryption or decryption in accordance with the Rijndael cipher.

3. An apparatus as claimed in Claim 2, wherein the transformation module is arranged to perform, in whole or in part, a Rijndael encryption or decryption round.

4. An apparatus as claimed in any preceding claim, wherein the apparatus is arranged to operate on data blocks comprising sixteen data components, each component comprising one data byte, wherein each shift register comprises four one-byte data registers.

**5.** An apparatus as claimed in Claim 4 when dependent on Claim 3, wherein the transformation module is arranged to perform one quarter of the Rijndael encryption or decryption round.

**6.** An apparatus as claimed in any preceding claim, in which each switch comprises a 2-to-1 selector switch.

**7.** An apparatus as claimed in any of claims 2 to 6, wherein the apparatus is arranged to perform encryption and further includes: a data/key addition module arranged to receive a data block to be encrypted and a cipher key, the data/key addition module being arranged to perform.an addition operation on the received data block and key and to cause the result of the addition operation to be loaded into the shift registers; a key scheduling module arranged to generate sub-keys from the cipher key and to provide the sub-keys to the transformation module; and a module arranged to implement the Rijndael final encryption round, the final encryption round module being arranged to receive transformed data components from the data registers.

**8.** An apparatus as claimed in any of claims 2 to 6, wherein the apparatus is arranged to perform decryption and further includes: a module arranged to arranged to receive a data block to be decrypted, to implement the Rijndael inverse final encryption round on the received data block and to cause the result to be loaded into the shift registers; a key scheduling module arranged to receive a cipher key, to generate sub-keys from the cipher key and to provide the sub-keys to the transformation module; and a data/key addition module arranged to receive transformed data components from the data registers.

**9.** A method of encrypting or decrypting a data block, comprising a plurality of data components, over a plurality of operational cycles, the method comprising: loading the data components into a respective data register, each data register being one of a sequence of data registers in one of a plurality of shift registers; and in respect of each operational cycle, causing a data component from a respective data register of each shift register to undergo one or more data encryption or decryption operations to produce a corresponding transformed data component; and setting at least one selector switch to determine whether an associated data register is loaded with a data component from a data register in its respective shift register or with the transformed data component corresponding to its respective shift register.

**10.** A computer program product comprising computer usable instructions for generating an apparatus according to Claim 1.

10
12
12
$P_{0,0}$ $P_{0,1}$ $P_{0,2}$ $P_{0,3}$
$P_{1,0}$ $P_{1,1}$ $P_{1,2}$ $P_{1,3}$
$P_{2,0}$ $P_{2,1}$ $P_{2,2}$ $P_{2,3}$
$P_{3,0}$ $P_{3,1}$ $P_{3,2}$ $P_{3,3}$
14
16
$N_k = 4$
$N_k = 6$
$N_k = 8$
$K_{0,0}$ $K_{0,1}$ $K_{0,2}$ $K_{0,3}$ $K_{0,4}$ $K_{0,5}$ $K_{0,6}$ $K_{0,7}$
$K_{1,0}$ $K_{1,1}$ $K_{1,2}$ $K_{1,3}$ $K_{1,4}$ $K_{1,5}$ $K_{1,6}$ $K_{1,7}$
$K_{2,0}$ $K_{2,1}$ $K_{2,2}$ $K_{2,3}$ $K_{2,4}$ $K_{2,5}$ $K_{2,6}$ $K_{2,7}$
$K_{3,0}$ $K_{3,1}$ $K_{3,2}$ $K_{3,3}$ $K_{3,4}$ $K_{3,5}$ $K_{3,6}$ $K_{3,7}$
16
17
17
$W_0$ $W_1$ $W_2$ $W_3$ $W_4$ $W_5$ $W_6$ $W_7$ $W_8$ $W_9$ ····
Round Key 0
Round Key 1
····

Fig. 1a

Fig. 1b

Fig. 1c

20
22
24
24
24
26
Plaintext Block
Cipher Key
Data/Key Addition
Rnd 0
Rnd 1
....
Rnd 8
Final Rnd
Cipher Text
Key Schedule
....
28
24
30
32
34
36
Round Input
ByteSub
ShiftRow
MixCol
Key Addition
Round Output
Round Key

Fig. 2

Fig. 3

40
Plaintext
Key
Data/Key
Addition
48
Key
Scheduler
50
128
32
44
Data
Scheduling
100
8
¼
Round
Transform
156
Final
Round
46
Ciphertext

Fig. 4

A
1A
2A
3A
4A
4B
1B
2B
3B
3C
4C
1C
2C
2D
3D
4D
1D
OPERAND
52
Four
Byte
4-to-1
MUX
54
¼ Round
Transform
56
(1A)
(2A)
(3A)
(4A)
(1B)
(2B)
(3B)
(4B)
(1C)
(2C)
(3C)
(4C)
(1D)
(2D)
(3D)
(4D)
58
RESULT
(operand for next round)

Fig. 5

160
160
4A
3A
2A
1A
Row 0
164
M2
M1
162
162
160
160
160
3B
2B
1B
4B
Row 1
166
M4
M3
162
160
162
160
2C
1C
4C
3C
Row 2
¼
Round
Transform
168
XX
161
M5
162
160
160
1D
4D
3D
2D
Row 3
156
170
160
100

Fig. 6a

160
160
(1A)
4A
3A
2A
Row 0
164
M2
M1
162
162
160
160
4B
3B
2B
(1B)
Row 1
166
M4
M3
162
160
162
160
3C
2C
(1C)
4C
Row 2
¼
Round
Transform
168
(1D)
161
M5
162
160
160
2D
XX
4D
3D
Row 3
156
170
160
100

Fig. 6b

160
160
(2A)
(1A)
4A
3A
Row 0
164
M2
M1
162
160
160
162
(2B)
4B
3B
(1B)
Row 1
166
¼
Round
Transform
M4
M3
162
160
162
160
4C
3C
(2C)
(1C)
Row 2
168
(2D)
161
M5
160
160
162
3D
(1D)
XX
4D
Row 3
156
170
100
160


Fig. 6c

160
160
(3A)
(2A)
(1A)
4A
Row 0
164
M2
M1
162
160
160
162
(3B)
(2B)
4B
(1B)
Row 1
166
¼
Round
Transform
M4
M3
162
160
162
160
(3C)
4C
(1C)
(2C)
Row 2
168
(3D)
161
M5
160
160
162
4D
(2D)
(1D)
XX
Row 3
156
170
100
160


Fig. 6d

160
160
(4A)
(3A)
(2A)
(1A)
Row 0
164
M2
M1
162
160
160
162
(4B)
(3B)
(2B)
(1B)
Row 1
166
¼
Round
Transform
M4
M3
162
160
162
160
(4C)
(3C)
(2C)
(1C)
Row 2
168
(4D)
161
M5
160
160
162
(4D)
(3D)
(2D)
(1D)
Row 3
156
170
100
160

Fig. 6e

Ciphertext
Key
40'
Inverse Final Round
46'
Key Scheduler
50'
128
32
44'
8
Data Scheduling
100'
¼ Inverse Round Transform
156'
Data/Key Addition
48'
Plaintext

Fig. 7

4A
3A
2A
1A
160'
Row 0
164'
XX
161'
M5
162'
1B
4B
3B
2B
Row 1
166'
¼ Inverse Round Transform
M4
M3
2C
1C
4C
3C
Row 2
168'
M2
M1
3D
2D
1D
4D
Row 3
156'
170'
100'

Fig. 8a

160'
160'
(1A)
4A
3A
2A
Row 0
164'
(1B)
161'
M5
162'
2B
160'
XX
4B
3B
Row 1
¼
Inverse
Round
Transform
166'
M4
162'
3C
2C
M3
162'
(1C)
4C
Row 2
168'
M2
162'
4D
3D
2D
M1
(1D)
Row 3
156'
170'
100'

Fig. 8b

160'
160'
(2A)
(1A)
4A
3A
Row 0
164'
(2B)
161'
M5
162'
3B
160'
(1B)
XX
4B
Row 1
¼
Inverse
Round
Transform
166'
M4
162'
4C
3C
M3
162'
(2C)
(1C)
Row 2
168'
M2
162'
(2D)
4D
3D
M1
(1D)
Row 3
156'
170'
100'

Fig. 8c

160'
(3A)
(2A)
(1A)
4A
Row 0
164'
(3B)
161'
M5
162'
4B
160'
(2B)
(1B)
XX
Row 1
¼
Inverse
Round
Transform
166'
M4
162'
(3C)
4C
M3
(1C)
(2C)
Row 2
168'
M2
(3D)
(2D)
4D
M1
(1D)
Row 3
156'
170'
100'

Fig. 8d

160'
(4A)
(3A)
(2A)
(1A)
Row 0
164'
(4B)
161'
M5
162'
(4B)
160'
(3B)
(2B)
(1B)
Row 1
¼
Inverse
Round
Transform
166'
M4
162'
(4C)
(3C)
M3
(2C)
(1C)
Row 2
168'
M2
(4D)
(3D)
(2D)
M1
(1D)
Row 3
156'
170'
100'

Fig. 8e

European Patent Office

# EUROPEAN SEARCH REPORT

Application Number
EP 02 01 9967

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | US 4 316 055 A (FEISTEL HORST)<br>16 February 1982 (1982-02-16)<br>* abstract *<br>* column 6, line 45 - column 7, line 36 *<br>* column 10, line 29 - column 12, line 7 *<br>* figures 1,2A,2B *<br>--- | 1,9,10<br>2-8 | H04L9/06 |
| Y | DAEMEN J ET AL: "AES PROPOSAL: RIJNDAEL"<br>AES PROPOSAL, XX, XX,<br>3 September 1999 (1999-09-03), pages 1-45, XP001060386<br>* page 8 - page 22 *<br>--- | 2-8 | |
| A | MCLOONE M ET AL: "High performance single-chip FPGA Rijndael algorithm implementations"<br>CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN: SPRINGER, DE,<br>vol. 2162, 14 May 2001 (2001-05-14), pages 65-76, XP002203795<br>ISBN: 3-540-42521-7<br>* the whole document *<br>---<br>-/-- | 1-10 | TECHNICAL FIELDS SEARCHED (Int.Cl.7)<br>H04L |

The present search report has been drawn up for all claims

| Place of search | Date of completion of the search | Examiner |
|---|---|---|
| MUNICH | 28 November 2002 | Bec, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number
EP 02 01 9967

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | KUO H ET AL: "ARCHITECTURAL OPTIMIZATION FOR A 1.82GBITS/SEC VLSI IMPLEMENTATION OF THE AES RIJDAEL ALGORITHM" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN: SPRINGER, DE, vol. 2162, 14 May 2001 (2001-05-14), pages 51-64, XP001061160 ISBN: 3-540-42521-7 * the whole document * ----- | 1-10 | |
| | | | TECHNICAL FIELDS SEARCHED (Int.Cl.7) |

The present search report has been drawn up for all claims

| Place of search | Date of completion of the search | Examiner |
|---|---|---|
| MUNICH | 28 November 2002 | Bec, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 02 01 9967

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2002

| Patent document cited in search report | | Publication date | Patent family member(s) | Publication date |
|---|---|---|---|---|
| US 4316055 | A | 16-02-1982 | NONE | |

EPO FORM P0459

For more details about this annex : see Official Journal of the European Patent Office, No. 12/82